# NEW EUROPEAN PATENT SPECIFICATION

(11) **EP 0 181 039 B2**
(45) Date of publication and mention of the opposition decision: **29.11.1995**
(45) Mention of the grant of the patent: 06.06.1990
(21) Application number: 85201777.1
(22) Date of filing: 08.11.1985
(51) Int. Cl.: A01B 3/42, A01B 15/14, A01B 61/04, A01B 49/02

(54) **A plough**
Pflug
Charrue

(30) Priority: 09.11.1984 NL 8403424
(43) Date of publication of application: 14.05.1986
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- DE-B- 1 053 832
- DE-C- 327 883
- DE-C- 333 919
- DE-C- 367 240
- FR-A- 760 711
- FR-A- 2 341 254
- FR-A- 2 346 951
- FR-A- 2 517 505
- FR-A- 2 526 263
- US-A- 3 789 928
- US-A- 4 141 419
- Leaflet Niemeyer "Baukasten-Beetpflüge - Variant 2000 - Variant 3000"
- Leaflet Niemeyer "Baukasten-Beetpflüge - Variant"
- Niemeyer Preisliste 1979
- Niemeyer Explosionszeichnung
- Niemeyer Einsatzanleitung "Variant 1502-2002-3002"
- Bulletin de Prix, Tracteurs et Machines Agricoles, HI, No.82/27
- Information Produit HI
- Leaflet "International - charrues réversibles LV 13-20
- Leaflet "Charrue semi-portée à largeur réglable Kverneland"
- Leaflet Husrol "Charrues réversibles polysocs gamme 65-70 et 76"

## Description

The invention relates to a plough comprising a frame and a number of plough bodies (11) cooperating with their own skim coulters (31) mounted ahead of the plough bodies (11), said plough bodies (11) being mounted on supporting arms (14) whereby the supporting arms (14) of the plough bodies (11) are pivotably connected to a main frame beam (1) of the frame, said pivotable connection comprising a substantially vertically extending pivot shaft (6), each substantially vertically extending pivot shaft (6) being provided with an arm (8) which is directed to one side of the main frame beam (1), each arm (8) being pivotably connected at its end away from the extending pivot shaft (6) to a control rod (23) which extends substantially parallel to the main frame beam (1), said pivotable connection further comprising a substantially horizontal pivot shaft (10) positioned near the substantially vertically extending pivot shaft (6), spring mechanisms being provided which bias the respective supporting arms (14) against respective stops (15, 16) said substantially horizontal pivot shaft (10), together with the corresponding plough body (11) and the respective spring mechanism being adjustable about the said substantially vertically extending pivot shaft (6) in a number of different positions.

Ploughs of this type are shown in the Kverneland ploughs "Varilarge" as shown on leaflets published before the priority date of this patent.

The constructions described in these leaflets were relatively simple and only suitable for ploughs which were not reversible.

According to the invention, the said substantially vertically extending pivot shaft (6) is connected at the side of the main frame beam (1) opposite to the control rod (23) with the aid of supports (5) and is disposed behind the substantially horizontal shaft (10) with respect to the intended direction (A) of the operative travel of the plough and wherein the plough is a reversible plough having a number of pairs of plough bodies (11) the plough bodies (11) of a pair being pivotable about the said substantially vertically extending pivot shaft (6) and about the said substantially horizontal pivot shaft (10) and whereby the spring mechanism (18) is cooperating with a plough body of a pair of plough bodies in encountering obstacles.

The US patent 4141419 shows a plough comprising a plurality of plough bodies that are adjustable about a vertical axis in order to be brought in a number of different settings with respect to the direction of travel of the plough. During operation the plough bodies cannot deflect when encountering hard objects such as stones.

For a better understanding of the present invention, and to show how it may be carried into effect, reference will now be made, by way of example, to the accompanying drawings, in which:
Figure 1 is a plan view of a reversible plough hitched to a tractor;
Figure 2 is a side view taken in the direction of the arrow II in Figure 1;
Figure 3 is an enlarged plan view of the front part of the plough;
Figure 4 is an enlarged plan view of a connection between a plough body and a main frame beam of the plough;
Figure 5 is a side view taken in the direction of the arrow V in Figure 4; and
Figure 6 shows a sectional view taken along the line VI-VI in Figure 4.

The plough shown in the Figures is a multi-share reversible plough, and comprises a main frame beam 1 which is substantially horizontal and extends at an angle of ± 30° to the intended direction of operative travel, as indicated by an arrow A. The main frame beam 1 has a channel section 2 made of sheet material, disposed with the side walls of the channel substantially horizontal (Figure 6). The free ends of the side walls of the channel are bent outwardly at right angles and are secured by bolts 3 to a plate 4 which extends over the full length of the frame beam and is substantially parallel to the web of the channel section between the side walls.

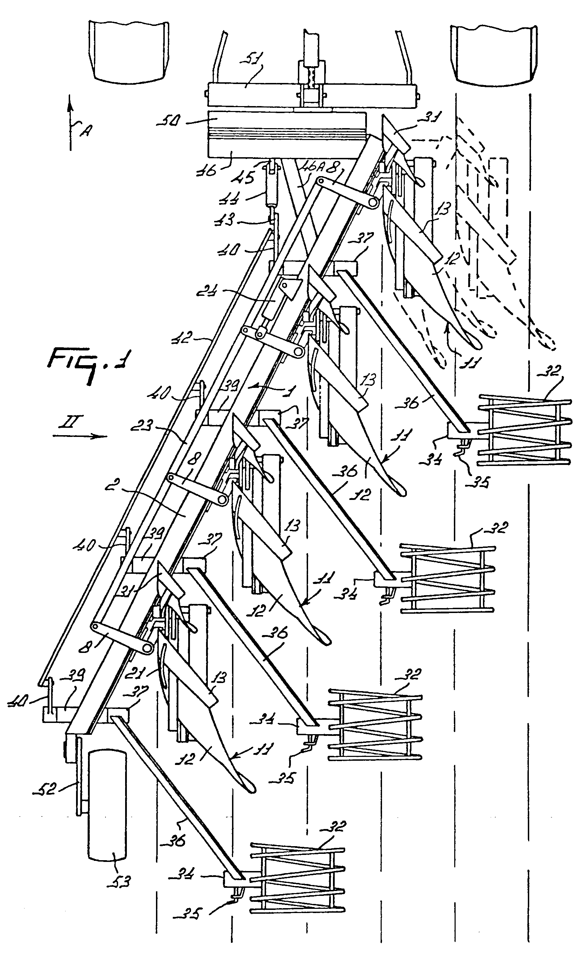

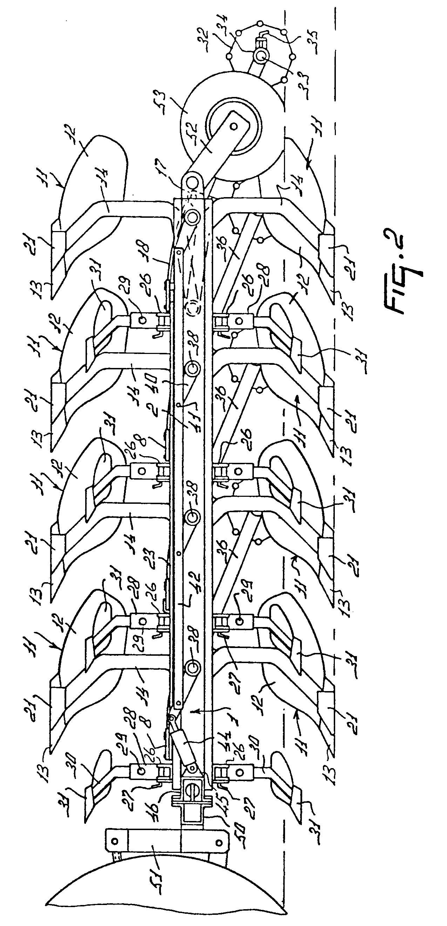

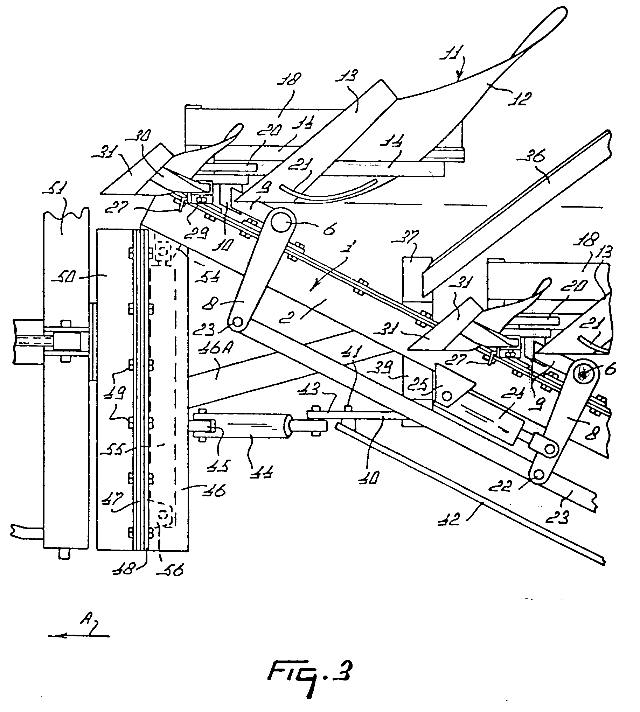

Substantially vertical shafts 6 are connected to the beam 1 at regular intervals by supports 5, which are secured to the beam 1 by the bolts 3 which fasten the plate 4 to the folded-over ends of the side walls of the channel section 2. As shown in Figures 1 and 2, a total of four shafts 6 are provided in this manner, the front and rear shafts 6 being spaced from the respective ends of the main frame beam 1 by distances which are approximately half and two-thirds, respectively, of the distance between adjacent shafts. The shafts 6 are rotatably supported in bushes 7 which are disposed one above the other with some spacing and are fixed to respective supports 5. At the top each shaft 6 has an arm 8 which tapers towards its free end and is directed to the other side of the main frame beam 1.

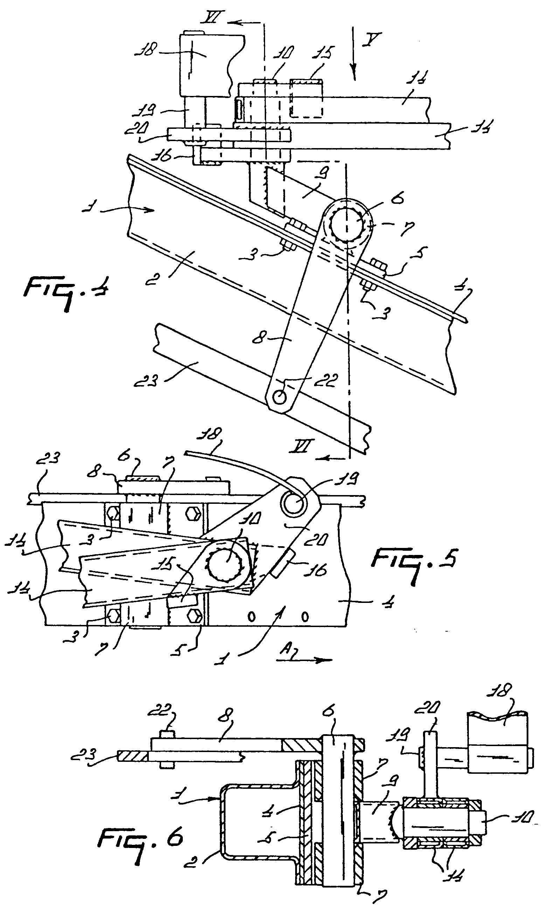

A second arm 9 is interposed between the bushes 7. The second arm 9 extends substantially parallel to the main frame beam 1 when the first arm 8 extends subtantially perpendicular to the longitudinal centre line of the frame beam (Figure 4).

The end of the second arm 9 away from the shaft 6 carries a shaft 10 which extends substantially horizontally and is inclined to the arm 9 at an angle other than 90°. The relative dispositions are that if the arm 9 extends substantially parallel to the main frame beam 1, the shaft 10 extends substantially transversely of the direction A (Figure 4). Each shaft 10 serves to support a pair of plough bodies 11 disposed one above the other. The plough bodies 11 of the respective pairs are jointly alternately capable of operation, operating as right-hand or left-hand bodies, respectively. The terms "right-hand" and "left-hand" when applied to the plough bodies mean that soil is discharged to the right or left, respectively, by the plough bodies 11, as viewed in the direction A. Each of the plough bodies 11 of each pair comprises a mouldboard 12 and a contiguous share 13, and is provided on a supporting arm 14 (Figure 2). In the operative position of each plough body 11, the share 13 is situated beneath the mouldboard 12. Each supporting arm 14 has a part which extends substantially vertically downwardly or upwardly, respectively, from its plough body 11. This part is connected at a bend in the arm 14 to a portion which slopes upwardly or downwardly, respectively, to the front, which portion is also connected at a further bend to a substantially horizontal, forwardly directed portion. The front end of this forwardly directed portion is mounted for pivotal movement about the shaft 10, which extends substantially horizontally and transversely of the direction A. The end of the shaft 10 has a stop 15 which, in operation, limits movement of the forwardly extending portion of the supporting arm 14 for the lower plough body 11 of each pair in the configuration shown in Figure 2. The stop 15 also serves to retain the front ends of the respective supporting arms 14 axially on the shaft 10, a further axial retaining stop 16 being provided on the other side of the arms 14 and serving to limit an upward movement of the supporting arm 14 of the upper plough body 11, in the configuration of Figure 2.

An upwardly extending support plate 17 is provided near the rear of the supporting arm 14 for the lower plough body 11, on the portion which slopes upwardly and to the front. Near its upper end, the support plate 17 has a stud on which is fitted a curved end of a leaf spring 18. The leaf spring 18 extends substantially horizontally and has a curved portion at its front end which fits around a stud 19 provided near the upper end of a lug 20, which is situated near the front of the supporting arm 14 for the upper plough body 11. As is shown in Figure 5, the leaf spring 18 curves upwardly, to provide a spring mechanism which basses the respective supporting arms 14 against their respective stops 15 and 16.

Near its lower end, that is to say in the region of the share 13 at the side pointing forwards during operation to the raised front, each plough body 11 includes a supporting element 21 which, as viewed on plan, has a curved shape. In operation this member 21 is predominantly, and at least at its front and rear ends, inclined to the direction A. At its front ends, i.e. the end nearer the shaft 6, the supporting member 21 is curved to the highest extent, which always enables an effective support, and its bottom edge is located in the region of the share bottom.

As shown in Figure 2, the supporting element 21 is in the form of a plate, the front edge of which slopes upwardly from the front to the rear, to meet a substantially horizontal upper edge which terminates at a substantially vertical rear edge.

Each arm 8 is pivotally connected, at its end away from the shaft 6, to a control rod 23 by means of a substantially vertical pin 22. The control rod 23 extends along the main frame beam 1 subtantially parallel to it. The second arm 8 from the front end of the main frame beam 1 is pivotally connected, at a position between the main frame beam 1 and the control rod 23, to the rear end of a hydraulic adjusting cylinder 24 whose other end is pivotally mounted on a support 25 provided on a vertical face of the main frame beam.

At a position ahead of each shaft 6, on the same side of the main frame beam 1 as the shaft 6, there is a support 26. The distance between the support 26 and the shaft 6 behind it is 1/4 of the distance between adjacent shafts 6. At a position away from the main frame beam 1, the support 26 carries a hingable cylindrical portion 28 which can be fixed by means of a pin 27 in either of two positions which are at right angles to each other. The shaft around which the cylindrical portion 28 can turn extends substantially parallel to the direction A. A support 30 for a skim coulter 31 is secured in the cylindrical portion 28 by means of a clamping bolt 29. The support 30 has a substantially upright portion from which extends a forwardly directed oblique portion. During operation each skim coulter 31 assumes a position as illustrated in Figure 1, relatively to the respective plough body 11. As a result it turns aside, ahead of the plough body 11, a thin layer of earth with any weeds or crop residues present therein, thus facilitating the task of the plough body 11. If the skim coulter 31 is not required, it can be made inoperative by rotating the portion 26 through ± 90° by means of the pin 27.

As shown in Figure 1, rollers 32 are provided which, during operation, are situated respectively obliquely behind each plough body, so that each roller 32 works the furrow slice which is turned aside and inverted by the respective plough body. Each roller 32 has one end fitted in a detachable manner by means of a journal pin 33 in a bearing bush 34, whose longitudinal centre line is horizontal and extends substantially transversely of the direction A. The journal pin 33 is releasably retained in the bearing bush 34 by a spring-loaded pin 35 which can be passed through an aperture in the bearing bush and an aperture in the journal pin. The bearing bush 34 is mounted on the lower end of an arm 36 which, as viewed on plan, extends forwardly and upwardly from the bearing bush, inclined to the direction A by an angle which is substantially equal to the angle between the main frame beam and the direction A.

That end of the arm 36 away from the bearing bush 34 has a further bearing bush 37 mounted on one end of a shaft 38. The shaft 38 is supported in a bearing in a bush 39 secured to the main frame beam 1 (Figure 1). The bush 39 is substantially horizontal and extends transversely of the direction A and parallel to the bearing bush 34 for the journal pin 33 of the roller 32. The end of the shaft 38 away from the arm 36 has an arm 40, which slopes forwardly and upwardly to an end which is freely pivotally mounted on a pin 41 on a rod 42 which extends substantially parallel to the main frame beam 1.

The arm 40 connected to the arm 36 of the front roller 32 is, as is shown in Figures 1 and 2, provided with an extension 43 which is pivotally connected to one end of a hydraulic adjusting cylinder 44. The other end of the hydraulic adjusting cylinder 44 is pivotally connected to a lug 45 provided at the rear of a substantially horizontal frame beam 46 which extends transversely of the direction A. One end of the frame beam 46 is provided at the front end of the main frame beam 1, a brace beam 46A being present between the beam 46 and the main frame beam 1. The frame beam 46 has a channel-shaped cross-section with horizontal side walls which extend forwardly and have outwardly directed flanges which are slidably retained between a plate 47 and strips 48. Bent-over flanges of side walls of a channel-shaped portion of a beam 50 are fastened to the front of the plate 47 by means of bolts 49 which also secure the strips 48. The beam 50 is disposed in front of the beam 46 and is connected by means of a shaft extending in the direction A and a revolving mechanism, not shown, to a trestle 51, which comprises a threepoint connection for coupling to the three-point lever linkage of a tracator. Using the revolving mechanism and the shaft, the whole assembly of the beams 50, 46 and 1 with the plough bodies 11, the skim coulters 31 and the rollers 32 can be rotated through 180°, to bring the previously inoperative plough bodies 11 and skim coulters 31 into operative positions. During this rotation, the respective rollers 32 can cause the arms 36 to rotate so that, under their own weight, they arrive in a position in which the rollers can again work the furrow slices turned aside and inverted by the respective operative plough bodies 11. During operation, the pressure on the respective rollers can optionally be increased by means of the hydraulic adjusting cylinder 44, which can, if desired, also maintain the rollers 32 in a transport position. However, it is alternatively possible to provide a separate locking means acting, for example, on the rod 42 to retain the rollers 32 in a transport position.

The rollers 32 shown in the Figures could be replaced by other tilling members.

The rear end of the main frame beam 1 has a wheel 53 which is rotatably mounted on an arm 52 and which during reversal of the plough can rotate from one operating position to another. The wheel 53 enables the working depth of the plough to be adjusted in a manner which is not shown in the drawings.

The front end of the main frame beam 1 is provided, inside the cross-beam 46, with a lug 54 (Figure 3), to which one end of a hydraulic adjusting cylinder 55 is pivotally connected. The cylinder 55 is disposed inside the beam, and its other end is pivotally connected to a lug 56 secured to the plate 47.

For operation, the hydraulic adjusting cylinders 24, 44 and 55 are connected to the hydraulic circuit of the tractor by means of pipes, not shown.

As has already been described above, the pressure exerted by the rollers 32 on the soil to be worked can be adjusted, during operation, by means of the hydraulic adjusting cylinder 44. The positions of the respective plough bodies 11 can be altered by means of the hydraulic cylinder 24, in a manner which enables the working width of each plough body to be altered. In addition, the positions of the plough bodies can be adapted to the type of soil and to the rate of travel of the plough.

In operation, the supporting member 21 travels along the upright side of a formed furrow near the lower end of each plough body II. The convex surface of the member 21 faces the furrow side. The supporting member 21 ensures that, in any position to which the plough body 11 can be adjusted, the plough body is effectively supported by the upright side of the furrow.

The plough bodies can be adjusted in a simple manner from the tractor driver's seat via the hydraulic adjusting cylinder 24 and the control rod 23. Thus it is possible, without any additional measures, to alter the positions of the plough bodies during operation to adapt the plough to prevailing circumstances (Figure 1), without the supporting member 21 forming an obstacle for the intended adjustment.

The hydraulic adjusting cylinder 55 accommodated in the cross-beam 46 can be actuated to displace the main frame beam 1 laterally, so as to displace the working range of the plough laterally relative to the tractor. This is indicated in Figure 1 for the front plough body by means of a broken-line position. Thus it is possible to adjust the point where the tractive force is applied in a simple and rapid manner; moreover, working along ditches and/or fences is facilitated. In addition, the possibility of this lateral adjustment makes it possible to position the front plough body over an open furrow made on a previous run so that ploughing proceeds during the next run with only three active plough bodies, less power consequently being required.

The active plough body 11 of each pair can, during operation, move backwards about the horizontal shaft 10, situated ahead of the vertical shaft 6, against the action of the spring 18 to avoid obstacles and other obstructions. During this movement, the inoperative plough body disposed above the respective active plough body moves only slightly, if at all. Thus, the mass to be moved is kept comparatively low.

## Claims

1. A plough comprising a frame and a number of plough bodies (11) cooperating with their own skim coulters (31) mounted ahead of the plough bodies (11), said plough bodies (11) being mounted on supporting arms (14) whereby the supporting arms (14) of the plough bodies (11) are pivotably connected to a main frame beam (1) of the frame, said pivotable connection comprising a substantially vertically extending pivot shaft (6), each substantially vertically extending pivot shaft (6) being provided with an arm (8) which is directed to one side of the main frame beam (1), each arm (8) being pivotably connected at its end away from the extending pivot shaft (6) to a control rod (23) which extends substantially parallel to the main frame beam (1), said pivotable connection further comprising a substantially horizontal pivot shaft (10) positioned near the substantially vertically extending pivot shaft (6), spring mechanisms being provided which bias the respective supporting arms (14) against respective stops (15, 16) said substantially horizontal pivot shaft (10), together with the corresponding plough body (11) and the respective spring mechanism being adjustable about the said extending pivot shaft (6) in a number of different positions,
characterized in that the said substantially vertically extending pivot shaft (6) is connected at the side of the main frame beam (1) opposite to the control rod (23) with the aid of supports (5) and is disposed behind the substantially horizontal shaft (10) with respect to the intended direction (A) of the operative travel of the plough and wherein the plough is a reversible plough having a number of pairs of plough bodies (11) the plough bodies (11) of a pair being pivotable about the said substantially vertically extending pivot shaft (6) and about the said substantially horizontal pivot shaft (10) and whereby the spring mechanism (18) is cooperating with a plough body of a pair of plough bodies in encountering obstacles.

2. A plough as claimed in claim 1, characterized in that one of the arms (8) is pivotally connected to a hydraulic adjusting cylinder (24).

3. A plough as claimed in claim 1 or 2, characterized in that each plough body (11) has a supporting member (21)which, during operation, bears on the vertical side of a furrow formed by the plough body (11), the supporting member (21) extending, at least partly, in a direction that differs from the intended direction (A) of operative travel of the plough.

4. A plough as claimed in claim 3, characterized in that, as viewed on plan, the supporting member (21) has a convex surface which, in operation, faces the upright side of the furrow.

5. A plough as claimed in claim 4, characterized in that the supporting member (21) has the most pronounced curvature at the front.

6. A plough as claimed in any one of claims 3 to 5, characterized in that, as viewed from the aside, the front edge of the supporting member (21) slopes upwardly and to the rear from its front end.

7. A plough as claimed in any one of claims 3 to 6, characterized in that the bottom of the supporting member (21) is at the level of the bottom of a share (13) of the plough body (11).

## Patentansprüche

1. Pflug mit einem Rahmen und mehreren Pflugkörpern (11), die mit ihren eigenen, vor ihnen angeordneten Vorschälern (31) zusammenwirken und an Tragarmen (14) angebracht sind, wobei die Tragarme (14) der Pflugkörper (11) mit einem Hauptrahmenbalken (1) des Rahmens schwenkbar verbunden sind, wobei die schwenkbare Verbindung eine im wesentlichen vertikale Schwenkachse (6) aufweist, wobei jede im wesentlichen vertikale Schwenkachse (6) mit einem Arm (8) versehen ist, der sich in Richtung auf eine Seite des Hauptrahmenbalkens (1) erstreckt, wobei jeder Arm (8) an seinem von der im wesentlichen vertikalen Schwenkachse (6) abgewandten Ende mit einer Stellstange (23) schwenkbar verbunden ist, die sich im wesentlichen parallel zu dem Hauptrahmenbalken (1) erstreckt, wobei die schwenkbare Verbindung ferner eine im wesentlichen horizontale Schwenkachse (10) aufweist, die nahe der im wesentlichen vertikalen Schwenkachse (6) positioniert ist, wobei Federmechanismen vorgesehen sind, die die jeweiligen Tragarme (14) gegen zugehörige Anschläge (15, 16) vorspannen, und wobei die im wesentlichen horizontale Schwenkachse (10) mit dem entsprechenden Pflugkörper (11) und dem zugehörigen Federmechanismus um die im wesentlichen vertikale Schwenkachse (6) in mehrere unterschiedliche Positionen einstellbar ist,
dadurch gekennzeichnet, daß die im wesentlichen vertikale Schwenkachse (6) auf der der Stellstange (23) gegenüberliegenden Seite des Hauptrahmenbalkens (1) mittels Stützen (5) angebracht und in bezug auf die Arbeitsrichtung (A) des Pfluges hinter der im wesentlichen horizontalen Achse (10) angeordnet ist, wobei der Pflug ein Drehpflug ist, der mehrere Paare von Pflugkörpern (11) aufweist, wobei die Pflugkörper (11) eines Paares um die im wesentlichen vertikale Schwenkachse (6) und die im wesentlichen horizontale Schwenkachse (10) schwenkbar sind, und wobei der Federmechanismus (18) heim Auftreffen auf Hindernisse mit einem Pflugkörper eines Pflugkörper-Paares zusammenwirkt.

2. Pflug nach Anspruch 1,
dadurch gekennzeichnet, daß einer der arme (8) mit einem hydraulischen Stellzylinder (24) schwenkbar verbunden ist.

3. Pflug nach den Ansprüchen 1 oder 2,
dadurch gekennzeichnet, daß jeder Pflugkörper (11) ein Stützglied (21) aufweist, das im Betrieb an der vertikalen Seite einer von dem Pflugkörper (11) gebildeten Furche liegt, und daß sich das Stützglied (21) mindestens teilweise in einer von der Arbeitsrichtung (A) des Pfluges abweichenden Richtung erstreckt.

4. Pflug nach Anspruch 3,
dadurch gekennzeichnet, daß das Stützglied (21) eine in Draufsicht konvexe Fläche aufweist, die in der Betriebslage der aufrechten Seite der Furche zugekehrt ist.

5. Pflug nach Anspruch 4,
dadurch gekennzeichnet, daß sich die am stärksten ausgeprägte Krümmung des Stützgliedes (21) an dessen Vorderseite befindet.

6. Pflug nach einem der Ansprüche 3 bis 5,
dadurch gekennzeichnet, daß die Vorderkante des Stützgliedes (21) in Seitenansicht aufwärts und vom vorderen Ende nach hinten verläuft.

7. Pflug nach einem der Ansprüche 3 bis 6,
dadurch gekennzeichnet, daß der Boden des Stützgliedes (21) in Höhe des Bodens eines Schares (13) des Pflugkörpers (11) liegt.

## Revendications

1. Charrue comprenant un châssis et un certain nombre de corps de charrue (11) coopérant avec leurs propres rasettes (31) montées en avant des corps de charrue (11), lesdits corps de charrue (11) étant montés sur des bras de support (14), les bras de support (14) des corps de charrue (11) étant reliés de manière pivotante à une poutre principale (1) du châssis, ladite liaison pivotante comprenant un arbre de pivotement (6) qui s'étend sensiblement verticalement, chaque arbre de pivotement (6) s'étendant sensiblement verticalement étant muni d'un bras (8) qui est dirigé vers un côté de la poutre principale (1) du châssis, chaque bras (8) étant relié de manière pivotante, à son extrémité opposée à l'arbre de pivotement (6) s'étendant sensiblement verticalement, à une barre de commande (23) qui s'étend sensiblement parallélement à la poutre principale (1) du châssis, ladite liaison pivotante comprenant en outre un arbre de pivotement (10) sensiblement horizontal, positionné près de l'arbre de pivotement (6) s'étendant sensiblement verticalement, des mécanismes à ressorts étant prévus pour solliciter les bras de support (14) respectifs contre des butées (15, 16) respectives, ledit arbre de pivotement (10) sensiblement horizontal étant, conjointement avec le corps de charrue (11) correspondant et le mécanisme à ressort respectif, réglable autour dudit arbre de pivotement (6) s'étendant sensiblement verticalement dans un certain nombre de positions différentes,
**caractérisée** en ce que ledit arbre de pivotement (6) s'étendant sensiblement verticalement est relié, sur le côté de la poutre principale (1) du châssis opposé à la barre de commande (23) à l'aide de supports (5) et est disposé derrière l'arbre (10) sensiblement horizontal, par rapport au sens de marche (A) prévu pour le travail de la charrue, la charrue étant une charrue réversible ayant un certain nombre de paires de corps de charrue (11), les corps de charrue (11) d'une paire étant pivotants autour dudit arbre de pivotement (6) s'étendant sensiblement verticalement et autour dudit arbre de pivotement (10) sensiblement horizontal, le mécanisme à ressort (18) coopérant avec un corps de charrue d'une paire de corps de charrue lors de la rencontre d'obstacles.

2. Charrue selon la revendication 1, caractérisée en ce qu'un des bras (8) est relié de manière pivotante à un vérin hydraulique de réglage (24).

3. Charrue selon la revendication 1 ou 2, caractérisée en ce que chaque corps de charrue (11) a un organe de support qui porte, pendant le travail, contre le flanc vertical d'un sillon ouvert par le corps de charrue (11), l'organe de support (21) s'étendant au moins partiellement dans une direction qui diffère de la direction (A) du sens de marche prévu pour la charrue.

4. Charrue selon la revendication 3, caractérisée en ce que, vu en plan, l'organe de support (21) a une surface convexe qui fait face, pendant le travail, au flanc vertical du sillon.

5. Charrue selon la revendication 4, caractérisée en ce que l'organe de support (21) a la courbure la plus prononcée à l'avant.

6. Charrue selon l'une quelconque des revendications 3 à 5, caractérisée en ce que, vu de côté, le bord antérieur de l'organe de support (21) est incliné vers le haut et vers l'arrière à partir de son extrémité antérieure.

7. Charrue selon l'une quelconque des revendications 3 à 6, caractérisée en ce que le bas de l'organe de support (21) est au niveau du bas d'un soc (13) du corps de charrue (11).
